Europäisches Patentamt

European Patent Office

Office européen des brevets

(11) Veröffentlichungsnummer: **0 243 574**
**B1**

(12) **EUROPÄISCHE PATENTSCHRIFT**

(45) Veröffentlichungstag der Patentschrift:
06.06.90

(51) Int. Cl.⁵: **F28F 9/18**, F28F 21/06,
B29C 65/02

(21) Anmeldenummer: 87100393.5

(22) Anmeldetag: 14.01.87

(54) Wärmetauscher und Verfahren zum Herstellen von Wärmetauschern.

(30) Priorität: 28.04.86 DE 3614339

(43) Veröffentlichungstag der Anmeldung:
04.11.87 Patentblatt 87/45

(45) Bekanntmachung des Hinweises auf die Patenterteilung:
06.06.90 Patentblatt 90/23

(84) Benannte Vertragsstaaten:
BE CH DE FR GB LI NL

(56) Entgegenhaltungen:
DE-A- 1 209 725
DE-A- 2 603 615
DE-A- 3 338 157
FR-A- 1 135 923
US-A- 2 433 546
US-A- 3 315 740
US-A- 3 462 362

H. DOMININGHAUS: "Die Kunststoffe und ihre Eigenschaften", 1976, VDI-Verlag, Düsseldorf, DE

(73) Patentinhaber: AKZO N.V., Velperweg 76, NL-6824 BM Arnhem(NL)

(72) Erfinder: Gemeinhardt, Hermann, Rosenstrasse 32, D-8753 Obernburg/Main(DE)

(74) Vertreter: Fett, Günter, Akzo Patente GmbH Kasinostrasse 19 - 23, D-5600 Wuppertal 1(DE)

**Beschreibung**

Die Erfindung betrifft ein Verfahren zum Herstellen von Wärmetauschern, bestehend aus mindestens einer Gruppe von Rohren aus thermoplastischem Kunststoff sowie einen Wärmetauscher, hergestellt nach diesem Verfahren.

Die heute bekannten Wärmetauscher bestehen aus Rohren oder Rohrgruppen, welche in einen Rohrboden eingebettet sind. Dieser Rohrboden wird entweder getrennt hergestellt, wobei dann die Rohrenden mit dem Rohrboden verbunden werden müssen, oder der Rohrboden wird beim Herstellen des Wärmetauschers dadurch erzeugt, daß eine Vergußmasse zwischen die Rohrenden eingebracht wird. Die Herstellung solcher Wärmetauscher ist aufwendig, weil entweder die Rohre in den Rohrboden eingefädelt und positioniert werden müssen, bevor sie mit dem Rohrboden verbunden werden, oder die Rohrenden mit speziellen Vorrichtungen auf Abstand gehalten werden müssen, um die Vergußmasse (selbstaushärtendes Material oder Kunststoffschmelze) zwischen die Rohre einbringen zu können.

Aus der US-A 2 433 546 ist ein Verfahren zum Herstellen eines Wärmetauschers bekannt, bei dem jedes einzelne Rohr auf Dorne aufgesteckt werden muß, bevor mit einer komplizierten Vorrichtung die Rohrenden derart über Kontaktwärme und weitere erhitzte Dorne erweitert werden, daß benachbarte Rohre miteinander verschweißen. Dieses Verfahren ist sehr aufwendig. Da für die Verschmelzung benachbarte Rohre innen in den Rohren angreifende Dorne verwendet werden müssen, ergibt sich beim Zurückziehen der Dorne eine ungleichmäßige Oberfläche der Einlauftrichter der Rohrenden. Ungleichmäßige und rauhe Oberflächen der Rohrenden-Einlauftrichter reduzieren aber den Wirkungsgrad der so hergestellten Wärmetauscher.

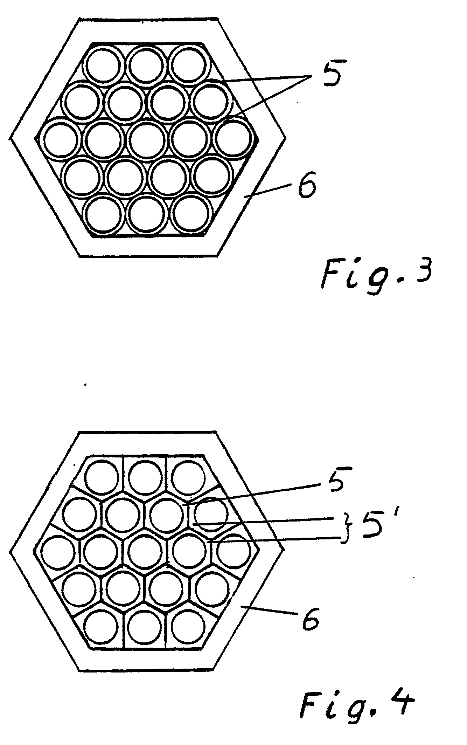

Aus der US-A 3 315 740 ist ein einfacheres Verfahren bekannt, bei dem die Rohrenden einer Seite der Rohre zusammengefaßt und in einer Hülse positioniert werden, wonach die Rohrenden eine im wesentlichen ebene Fläche bilden. Über Wärmestrahlung wird den zusammengefaßten Rohrenden soviel Wärme zugeführt, daß die Rohrenden erweichen und mit benachbarten Rohrenden verschmelzen. Wie sich aus der Figur 3 ergibt, weist das nach diesem Verfahren hergestellte Produkt eine sehr ungleichmäßige Struktur auf, so daß die einzelnen Rohre für das durchströmende Medium unterschiedliche Widerstände darstellen. Die Durchströmung der einzelnen Rohre wird dadurch ungleichmäßig, so daß der Wirkungsgrad eines nach diesem Verfahren hergestellten Wärmetauschers wiederum nicht optimal ist. Außerdem muß bei dem bekannten Verfahren nach der Wärmebehandlung ein Vakuum an die Hülse angelegt werden, solange die Rohrenden noch erweicht sind, um eine dichte Verbindung zwischen Rohren und Hülse zu erreichen.

Aufgabe der vorliegenden Erfindung ist es, ein Verfahren zum Herstellen eines Wärmetauschers, welcher aus mindestens einer Gruppe von Rohren aus thermoplastischem Kunststoff besteht, wobei die Rohrenden einer Gruppe dicht nebeneinander liegen und die Rohrenden benachbarter Rohre stirnseitig miteinander verschmolzen sind, bei dem die Rohrenden zumindest einer Seite der Rohre zusammengefaßt und in einer Hülse positioniert werden, wonach die Rohrenden miteinander eine im wesentlichen ebene Fläche bilden, und bei dem den zusammengefaßten Rohrenden kontaktlos soviel Wärme zugeführt wird, daß die Rohrenden mindestens teilweise erweichen und mit benachbarten Rohrenden verschmelzen, zur Verfügung zu stellen, bei dem die o.g. Nachteile wesentlich verringert werden. Insbesondere soll ein besonders einfaches und sicheres Herstellungsverfahren zur Verfügung gestellt werden, durch welches besonders gleichmäßige, kompakte Wärmetauscher mit gutem Wirkungsgrad hergestellt werden können. Es ist auch Aufgabe der vorliegenden Erfindung, nach diesem Verfahren hergestellte Wärmetauscher zur Verfügung zu stellen.

Die erfindungsgemäß gestellte Aufgabe wird bei dem genannten Verfahren dadurch gelöst, daß vor der Wärmezufuhr die Rohrenden derart positioniert werden, daß sie zumindest nahezu vertikal nach oben angeordnet sind, und dann den Rohrenden von oben her soviel Wärme zugeführt wird, daß die Außenwände der Rohrenden beim Erweichen sich derart erweitern, daß diese sich an die Außenwände benachbarter Rohrenden anlegen, um mit diesen zu verschmelzen.

Die Wärmezufuhr erfolgt in der Regel durch Wärmestrahlung. Bei Wärmestrahlung kann die Wärmezufuhr in einfachster Weise dadurch erreicht werden, daß eine Heizplatte von oben auf die Rohrenden zubewegt wird und in einem geringen Abstand, der im Bereich von 0,5 bis 30 mm liegt, solange positioniert wird, bis die Rohrenden miteinander verschmolzen sind. Man kann die thermische Behandlung auch unter Vakuum oder unter einer Schutzgasatmosphäre durchführen, wobei dann der Abstand der Heizplatte in anderen Bereichen liegen kann.

Die Wärmezufuhr kann aber auch durch Schallwellen, Licht, elektromagnetische Wellen, heiße Gase, heiße Flüssigkeiten o. ä. erfolgen. Wesentlich hierbei ist, daß die Rohrenden mit der eigentlichen Wärmequelle nicht in Berührung kommen.

Wenn bei dem erfindungsgemäßen Verfahren eine Hülse aus einem Werkstoff verwendet wird, an den die Rohrenden kaum oder gar nicht ankleben, so kann die Hülse nach dem Erkalten der mit einander verschmolzenen Rohrenden wieder abgezogen werden. Die miteinander verschmolzenen Rohrenden können dann in eine andere Hülse, beispielsweise in einen Rohrboden oder in einen Wärmetauscher mit Hilfe von herkömmlichen Verfahren eingebettet werden.

Es hat sich als Vorteil herausgestellt, wenn die Rohrenden derart positioniert werden, daß sie mit der Hülse bündig oder die Hülse um bis zu 4 mm überragend angeordnet sind.

Die Fläche der miteinander verschweißten Rohrenden weist dann eine hervorragende Festigkeit auf, wenn eine Hülse verwendet wird, die zumindest teilweise aus thermoplastischem Material besteht, und den Rohrenden soviel Wärme zugeführt wird, daß sich die der Hülse benachbarten Rohre an die Hülse anlegen und mit dieser verschmelzen.

Die thermische Behandlung soll bevorzugt unter Einhaltung folgender Bedingung durchgeführt werden:

$$0,0175 < Q \quad e \quad \left(\frac{t}{\rho \, c_p \, \lambda}\right)^{1/2} < 0,5,$$

wobei Q die zugeführte Wärmemenge, pro Fläche (Stirnseite) und Zeit in $J/m^2s$,
e der lineare Ausdehnungskoeffizient des Stabmaterials in 1/K,
t die Zeitdauer der Wärmeeinwirkung in sec.,
$\rho$ die Dichte des Stabmaterials in $kg/m^3$,
$C_p$ die spezifische Wärme des Stabmaterials in J/kg K, und
$\lambda$ die Wärmeleitfähigkeit des Stabmaterials in J/msK

Das erfindungsgemäße Verfahren gelingt vorzüglich, wenn Rohre aus einem thermoplastischen Werkstoff verwendet werden, welcher im Bereich zwischen Raumtemperatur und Schmelztemperatur einen mittleren linearen Ausdehnungskoeffizienten zwischen $100 \times 10^{-6}$ und $400 \times 10^{-6}$ 1/K besitzt.

Günstig ist es, wenn die Rohrenden zumindest teilweise auf eine Temperatur, die oberhalb der Schmelztemperatur des Rohrmaterials liegt, erhitzt werden.

Die nach dem erfindungsgemäßen Verfahren hergestellten Wärmetauscher weisen stirnseitig, das heißt auf der Fläche, in welcher die Rohre enden, eine mit der Hülse bündig abschließende Fläche auf; wenn die Rohrenden vor der thermischen Behandlung derart in der Öffnung der Hülse positioniert werden, daß die Rohrenden die Hülse 0,5 bis 3 mm überragen.

Am günstigsten kann das erfindungsgemäße Verfahren dann durchgeführt werden, wenn die Rohrenden zu einer kompakten Packung — im Falle von kreisförmigen oder sechseckigen Außenquerschnitten der Rohrenden zu einer Packung mit sechseckiger Außenkontur — zusammengefaßt werden, bevor ihnen Wärme zugeführt wird.

Bevorzugt werden bei dem erfindungsgemäßen Verfahren Rohre verwendet, deren hydraulischer Durchmesser jeden Hohlraumes zwischen 0,3 und 15 mm, vorzugsweise zwischen 0,5 und 7,5 mm, und deren Wandstärke an der dünnsten Stelle zwischen 5 und 25%, vorzugsweise zwischen 7,5 und 17,5%, des hydraulischen Durchmessers liegt.

Der hier verwendete Begriff Hülse ist nicht beschränkt auf röhrenförmige Körper. Sie kann auch die Form einer Platte aufweisen, die eine mit der Außenkontur des Rohrbündels korrelierende durchgehende Öffnung aufweist. In einer Platte können auch mehrere Öffnungen für jeweils ein Rohrbündel vorgesehen sein. Die Hülse kann aber auch Teil des das Rohrbündel umfassenden Wärmetauscher-Gehäuses sein.

Wenn hier bei dem erfindungsgemäßen Verfahren ausgeführt wird, daß vor der thermischen Behandlung die Rohrenden derart positioniert werden, daß diese eine im wesentlichen ebene Fläche bilden, so soll diese Bedingung mit einschließen, daß diese Fläche auch konvex oder konkav ausgebildet sein kann.

Die erfindungsgemäß gestellte Aufgabe wird auch durch einen nach dem erfindungsgemäßen Verfahren hergestellten Wärmetauscher gelöst.

In der Regel sind die Rohrenden eines solchen Wärmetauschers mindestens bis zu einer Tiefe, die der dünnsten Wandstärke der Rohre entspricht, miteinander bzw. mit der Hülse verschmolzen

Unter den Begriff «Wärmetauscher» fallen im Sinne der Erfindung auch Stoffaustauscher für Gase sowie Schalldämpfer für Gas- oder Flüssigkeitsstrahlen.

Unter den Begriff Rohre sind im Sinne der vorliegenden Erfindung zusammengefaßt alle rohrförmigen Körper, wie beispielsweise Rohre, Schläuche oder Hohlfäden. Die Querschnittsform der Rohre ist nicht auf kreisförmige Querschnitte beschränkt; die Rohre können auch elliptischen oder vieleckigen, beispielsweise dreieckigen, viereckigen, quadratischen, fünfeckigen usw. Querschnitt aufweisen.

Die Wandstärke der Rohre, die sich aufgrund des Außen-und Innenquerschnitts der Rohre ergibt, kann über den Umfang der Rohre gleich oder unterschiedlich sein. Außen-und Innenquerschnitt der Rohre können dieselbe oder verschiedene Querschnittsform aufweisen. Beispielsweise kann ein Rohr im Außenquerschnitt eine vieleckige Kontur und im Innenquerschnitt eine kreisförmige oder elliptische Kontur aufweisen. Auch kann der Innenquerschnitt der Rohre einen oder mehrere durchgehende Hohlräume aufweisen. Die Rohre können auch zu Gruppen zusammengesetzt sein. Diese Rohrgruppen können beispielsweise äußerlich die Form einer Platte aufweisen, z.B. dann, wenn die Rohre achsparallel nebeneinander liegen und die Achsen auf einer geraden Linie angeordnet sind.

Eine besonders kompakte Form im Bereich der Hülse des erfindungsgemäßen Wärmetauschers ergibt sich dann, wenn der Innenquerschnitt der Hülse und der Außenquerschnitt aller Enden der in einer Hülse angeordneten Rohrgruppen die Form eines Sechsecks aufweist. Dies gilt besonders dann, wenn der Außenquerschnitt jedes Rohres oder jeder Rohrgruppe kreisförmig oder sechseckig ist. Für kreisförmigen Außenquerschnitt der Rohrenden ist das Sechseck Gewähr für die dichteste Packung der Rohrenden. Ein solches Sechseck weist in der Regel zumindest in etwa gleich lange Seiten auf. Jede Querschnittsform der Hülse ist allerdings geeignet, soweit die Rohrenden in kompakter Anordnung in die Hülse eingeführt werden können.

Jede Röhrengruppe kann aus 7 bis 1141 Röhren bestehen.

Der thermoplastische Polymerwerkstoff, aus dem Rohre und/ oder Hülse bestehen, ist bevorzugt ein Polyäthylen, Polypropylen oder gehört zu den Fluorpolymeren. Die Rohre des Wärmetauschers weisen gewöhnlich keine Porosität oder eine Porosität von maximal 20% des Wandvolumens auf.

Die erfindungsgemäß gestellte Aufgabe wird auch gelöst durch ein Verfahren zum Herstellen eines erfindungsgemäßen Wärmetauschers, welches sich dadurch auszeichnet, daß die Rohrenden zumindest einer Seite der Rohre zusammengefaßt und derart in einer Hülse positioniert werden, daß die Rohrenden nahezu vertikal nach oben angeordnet sind, und die Rohrenden miteinander eine im wesentlichen ebene Fläche bilden, daß dann von oben her den Rohrenden soviel Wärme zugeführt wird, daß die Rohrenden mindestens teilweise erweichen und die Außenwände der Rohrenden sich derart erweitern, daß diese sich an die Außenwände benachbarter Rohrenden anlegen und mit diesen Rohrenden verschmelzen.

Die Erfindung wird anhand eines Beispiels näher erläutert.

Die Eigenschaften der in dem nachfolgenden Beispiel verwendeten Kunststoffe sind in der Tabelle zusammengestellt.

Tabelle

| Eigenschaft | Bestimmung nach | Einheit | PVDF Typ I | PVDF Typ II |
|---|---|---|---|---|
| Dichte | ASTM D 792 | g/cm$^3$ | 1,78 | 1,78 |
| «Melt flow index» | ASTM D 1238 | | | |
| –230°C, 10 kg | | g/10 min | 50 | 13 |
| –230°C, 5 kg | | g/10 min | 18 | 4 |
| –230°C, 2,16 kg | | g/10 min | 6 | 1 |
| kristalliner Schmelzpunkt | | °C | 177 | 177 |
| linearer Ausdehnungskoeffizient | ASTM D 696 | K$^{-1}$ | $106 \times 10^{-6}$ | $128 \times 10^{-6}$ |
| Wärmeleitfähigkeit | ASTM C 177 | W/m.K | 0,19 | 0,19 |
| Spezifische Wärme zwischen 0 und 100°C | | J/kg.K | 960 | 960 |
| Zugfestigkeit 5 mm/min | ASTM D 638 | MPa | 57 | 54 |
| Bruchdehnung 5 mm/min | ASTM D 638 | % | 12 | 80 |
| Modul bei 1 mm/min | ASTM D 638 | MPa | 2600 | 2400 |

Ein Bündel von 91 Röhren aus PVDF Typ I, die einen Außendurchmesser von 2 mm und eine Wandstärke von 0,15 mm aufweisen, werden derart zusammengefaßt, daß sie in eine sechseckige Öffnung einer Hülse aus PVDF Typ II, die eine Länge von 30 mm aufweist, eingeführt werden können. Die Seiten der sechseckigen Öffnung sind alle 12 mm lang, wobei alle Eckpunkte des Sechsecks auf einem Kreis liegen. Die Öffnung der Platte weist nach der Außenseite (Stirnseite) hin eine Abschrägung auf, wobei gegenüberliegende Abschrägungen einen spitzen Winkel von 45° einschließen, und die Abschrägung von der Oberfläche bis zu einer Tiefe von 1,5 mm sich erstreckt. Die Rohrenden werden derart in der Öffnung der Hülse positioniert, daß diese die Kante der Hülse um 0,5 mm überragen.

Eine runde Heizplatte mit einem Durchmesser von 100 mm, welche einen Emissionskoeffizienten von 0,9 hat und auf eine Temperatur von 430°C erhitzt wurde, wurde 2 Minuten lang in einem Abstand von 10 mm über die im wesentlichen nach oben gerichteten Enden der Röhren gehalten, wodurch sich die Rohrenden erweiterten. Nach dem Abkühlen der Rohrenden und der Hülse kann festgestellt werden, daß die Rohrenden miteinander bzw. mit der Hülse über eine Tiefe von 1,25 mm miteinander bzw. mit der Hülse fest verschweißt sind.

Auf dieselbe Weise werden auch die gegenüberliegenden Rohrenden miteinander verbunden. Eine derart hergestellte Rohrgruppe kann entweder allein, oder es können mehrere Gruppen nebeneinander in ein Wärmetauschergehäuse eingesetzt werden.

Die Erfindung wird auch anhand von Figuren erläutert.

Es zeigen:

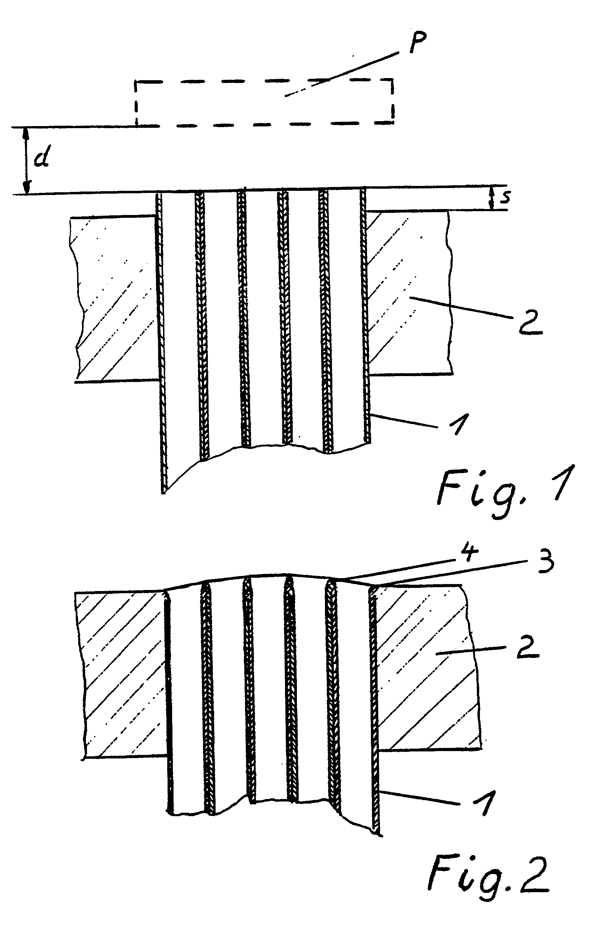

Figur 1 eine Anordnung von bereits positionierten Rohrenden in einer Hülse vor der thermischen Behandlung im Querschnitt

Figur 2 die Anordnung gemäß Figur I nach der thermischen Behandlung

Figur 3 eine Anordnung von bereits positionierten Rohrenden in einer Hülse vor der thermischen Behandlung in Draufsicht gemäß Figur I

Figur 4 die Anordnung gemäß Figur 3 nach der thermischen Behandlung.

In Figur I sind die fünf dargestellten Rohre I in einer Hülse 2 - hier als Platte ausgebildet - derart positioniert, daß die Rohrenden eine ebene Fläche bilden und die Hülse 2 um den Betrag s überragen. Zur thermischen Behandlung wird nun eine erhitzte Platte P - hier gestrichelt gezeichnet - in einem Abstand d von oben her auf die Rohrenden gehalten. Hierdurch erweitern sich die Rohrenden I und verschmelzen miteinander.

Nach der thermischen Behandlung sind die Rohrenden der Rohre I miteinander bzw. mit der Hülse 2 verbunden. Die Stellen, an denen das Rohrende eines Rohres I mit der Hülse 2 verschmolzen ist, ist mit 3, an denen zwei Rohrenden miteinander verschmolzen sind, ist mit 4 bezeichnet.

Im Querschnitt kann man an den Verschmelzungsstellen 3 bzw. 4 erkennen, daß die Werkstoffe der beiden aneinander geschmolzenen Rohrenden derart sich miteinander vermischt haben, daß die Rohraußenwand nicht mehr erkennbar ist.

In Figur 3 ist - ähnlich wie in Figur I - die Anordnung von I9 Rohren in einer Hülse 6 mit sechseckigem Querschnitt vor der thermischen Behandlung in Draufsicht dargestellt. Hierbei ergibt sich die dichteste Packung für Rohre mit kreisförmigem Querschnitt.

Nach der thermischen Behandlung - wenn die Rohrenden der Rohre 5 miteinander verschmolzen sind - ergibt sich in Draufsicht eine Anordnung, wie sie in Figur 4 dargestellt ist. Sofern ein Rohr 5 mit sechs benachbarten Rohren 5' verschmolzen ist, ergibt sich für das Rohr 5 in Draufsicht (auf die Stirnseite) eine sechseckige Kontur des Rohrendes. Für Rohrenden, die auch mit der Hülse 6 verschmolzen sind, ergeben sich die in Figur 4 ebenfalls dargestellten Konturen.

## Patentansprüche

1. Verfahren zum Herstellen eines Wärmetauschers, welcher aus mindestens einer Gruppe von Rohren aus thermoplastischem Kunststoff besteht, wobei die Rohrenden einer Gruppe dicht nebeneinander liegen und die Rohrenden benachbarter Rohre stirnseitig miteinander verschmolzen sind, bei dem die Rohrenden zumindest einer Seite der Rohre zusammengefaßt und in einer Hülse positioniert werden, wonach die Rohrenden miteinander eine im wesentlichen ebene Fläche bilden, und bei dem den zusammengefaßten Rohrenden kontaktlos soviel Wärme zugeführt wird, daß die Rohrenden mindestens teilweise erweichen und mit benachbarten Rohrenden verschmelzen, dadurch gekennzeichnet, daß vor der Wärmezufuhr die Rohrenden derart positioniert werden, daß sie zumindest nahezu vertikal nach oben angeordnet sind, und dann den Rohrenden von oben her soviel Wärme zugeführt wird, daß die Außenwände der Rohrenden beim Erweichen sich derart erweitern, daß diese sich an die Außenwände benachbarter Rohrenden anlegen, um mit diesen zu verschmelzen.

2. Verfahren nach Anspruch 1, dadurch gekennzeichnet, das die Rohrenden derart positioniert werden, daß sie mit der Hülse bündig oder die Hülse bis zu 4 mm überragend angeordnet sind.

3. Verfahren nach Anspruch 1 oder 2, dadurch gekennzeichnet, daß eine Hülse vewendet wird, die zumindest teilweise aus thermoplastischem Material besteht, den Rohrenden soviel Wärme zugeführt wird, daß sich die der Hülse benachbarten Rohre an die Hülse anlegen und mit dieser verschmelzen.

4. Verfahren nach einem oder mehreren der Ansprüche 1 bis 3, dadurch gekennzeichnet, daß die thermische Behandlung unter Einhaltung folgender Bedingung durchgeführt wird:

$$0,0175 < Q \quad e^{\left(\frac{t}{\rho \, c_p \, \lambda}\right)^{1/2}} < 0,5,$$

wobei Q die zugefülfte Wärmemenge, pro Fläche (Stirnseite) und Zeit in $J/m^2 s$,

e der lineare Ausdehnungskoeffizient des Stabmaterials in $1/K$,

t die Zeitdauer der Wärmeeinwirkung in sec.,

$\rho$ die Dichte des Stabmaterials in $kg/m^3$,

$c_p$ die spezifische Wärme des Stabmaterials in J/kg K, und

$\lambda$ die Wärmeleitfähigkeit des Stabmaterials in J/msK

5. Verfahren nach einem oder mehreren der Ansprüche 1 bis 4, dadurch gekennzeichnet, daß Rohre aus einem thermoplastischen Werkstoff verwendet werden, welcher im Bereich zwischen Raumtemperatur und Schmelztemperatur einen mittleren linearen Ausdehnungskoeffizienten zwischen $100 \times 10^{-6}$ und $400 \times 10^{-6}$ $1/K$ besitzt.

6. Verfahren nach einem oder mehreren der Ansprüche 1 bis 5, dadurch gekennzeichnet, daß die Rohrenden zumindest teilweise auf eine Temperatur, die oberhalb der Schmelztemperatur des Rohrmaterials liegt, erhitzt werden.

7. Verfahren nach einem oder mehreren der Ansprüche 1 bis 6, dadurch gekennzeichnet, daß die Rohrenden vor der thermischen Behandlung derart in der Öffnung der Hülse positioniert werden, daß die Rohrenden die Hülse 0,5 bis 3 mm überragen.

8. Verfahren nach einem der Ansprüche 1 bis 7, dadurch gekennzeichnet, daß die Rohrenden zu einer kompakten Packung zusammengefaßt werden, bevor ihnen Wärme zugeführt wird.

9. Verfahren nach einem oder mehreren der Ansprüche 1 bis 8, dadurch gekennzeichnet, daß Rohre verwendet werden, deren hydraulischer Durchmesser jeden Hohlraumes zwischen 0,3 und 15 mm und deren Wandstärke an der dünnsten Stelle zwischen 5 und 25% des hydraulischen Durchmessers liegt.

10. Verfahren nach Anspruch 9, dadurch gekennzeichnet, daß der hydraulische Durchmesser der Hohlräume zwischen 0,5 und 7,5 mm liegt.

11. Verfahren nach Anspruch 9 oder 10, dadurch gekennzeichnet, daß die Wandstärke an der dünnsten Stelle zwischen 7,5 und 17,5% des hydraulischen Durchmessers liegt.

12. Wärmetauscher, hergestellt nach dem Verfahren nach einem oder mehreren der Ansprüche 1 bis 11.

13. Wärmetauscher nach Anspruch 12, dadurch gekennzeichnet, daß die Rohrenden mindestens bis zu einer Tiefe, die der dünnsten Wandstärke der Rohre entspricht, miteinander bzw. mit der Hülse verschmolzen sind.

14. Wärmetauscher nach Anspruch 12 oder 13, dadurch gekennzeichnet, daß der Innenquerschnitt der Hülse und der Außenquerschnitt aller Enden der in einer Hülse angeordneten Rohrgruppe die Form eines Sechsecks aufweist.

15. Wärmetauscher nach einem oder mehreren der Ansprüche 12 bis 14, dadurch gekennzeichnet, daß jede Röhrengruppe aus 7 bis 1141 Röhren besteht.

16. Wärmetauscher nach einem oder mehreren der Ansprüche 12 bis 15, dadurch gekennzeichnet, daß Rohrwerkstoff und/ oder Hülsenwerkstoff aus thermoplastischem Polymer besteht, welches zu den Fluorpolymeren gehört.

17. Wärmetauscher nach einem oder mehreren der Ansprüche 12 bis 15, dadurch gekennzeichnet, daß Rohrwerkstoff und/ oder Hülsenwerkstoff aus Polyäthylen besteht.

18. Wärmetauscher nach einem oder mehreren der Ansprüche 12 bis 15, dadurch gekennzeichnet, daß Rohrwerkstoff und/oder Hülsenwerkstoff aus Polypropylen besteht.

19. Wärmetauscher nach einem oder mehreren der Ansprüche 12 bis 18, dadurch gekennzeichnet, daß die Rohre eine Porosität von maximal 20% des Wandvolumens aufweisen.

**Claims**

1. Method of manufacturing a heat exchanger which consists of at least one group of tubes made of thermoplastic, the tube ends of a group lying close together and the tube ends of adjacent tubes being fused with one another at the front, in which method the tube ends of at least one side of the tubes are combined and positioned in a sleeve, whereupon the tube ends together form an essentially plane surface, and in which so much heat is supplied in a contactless manner to the combined tube ends that the tube ends become at least partly soft and fuse with adjacent tube ends, characterized in that, before the heat is supplied, the tube ends are positioned in such a way that they are arranged at least almost vertically upwards, and then so much heat is supplied to the tube ends from above that the outer walls of the tube ends, during softening, widen in such a way that they bear against the outer walls of adjacent tube ends in order to fuse with the latter.

2. Method according to claim 1, characterized in that the tube ends are positioned in such a way that they are arranged flush with the sleeve or so as to protrude up to 4 mm beyond the sleeve.

3. Method according to claim 1 or 2, characterized in that a sleeve is used which is at least partly made of thermoplastic, and so much heat is supplied to the tube ends that the tubes adjacent to the sleeve bear against the sleeve and fuse with the latter.

4. Method according to one or more of claims 1 to 3, characterized in that the thermal treatment is carried out while adhering to the following conditions:

$$0,0175 < Q \; e \; \left(\frac{t}{\rho \, c_p \, \lambda}\right)^{1/2} < 0,5,$$

where Q = the heat quantity supplied, per area (front face) and time in $J/m^2s$,
e = the linear coefficient of expansion of the bar material in 1/K,
t = the duration of the heat effect in sec.,
$\rho$ = the density of the bar material in $kg/m^3$,
$C_p$ = the specific heat of the bar material in J/kg K, and
$\lambda$ = the thermal conductivity of the bar material in J/msK

5. Method according to one or more of claims 1 to 4, characterized in that tubes of thermoplastic are used which have an average linear coefficient of expansion between 100 x 10⁻⁶ and 400 x 10⁻⁶ 1/K in the range between room temperature and melting temperature.

6. Method according to one or more of claims 1 to 5, characterized in that the tube ends are heated at least partly to a temperature which is above the melting temperature of the tube material.

7. Method according to one or more of claims 1 to 6, characterized in that the tube ends, before the thermal treatment, are positioned in the opening of the sleeve in such a way that the tube ends protrude 0.5 to 3 mm beyond the sleeve.

8. Method according to any of claims 1 to 7, characterized in that the tube ends are combined to form a compact pack before heat is supplied to them.

9. Method according to one or more of claims 1 to 8, characterized in that tubes are used whose hydraulic diameter of each hollow space is between 0.3 and 15 mm and whose wall thickness at the thinnest point is between 5 and 25% of the hydraulic diameter.

10. Method according to claim 9, characterized in that the hydraulic diameter of the hollow spaces is between 0.5 and 7.5 mm.

11. Method according to claim 9 or 10, characterized in that the wall thickness at the thinnest point is between 7.5 and 17.5% of the hydraulic diameter.

12. Heat exchanger manufactured according to the method according to one or more of claims 1 to 11.

13. Heat exchanger according to claim 12, characterized in that the tube ends are fused with one another or with the sleeve at least down to a depth which corresponds to the thinnest wall thickness of the tubes.

14. Heat exchanger according to claim 12 or 13, characterized in that the inner cross-section of the sleeve and the outer cross-section of all ends of the tube group arranged in a sleeve have the shape of a hexagon.

15. Heat exchanger according to one or more of claims 12 to 14, characterized in that each tube group consists of 7 to 1141 tubes.

16. Heat exchanger according to one or more of claims 12 to 15, characterized in that the tube material and/or the sleeve material consists of a thermoplastic polymer which is one of the fluoropolymers.

17. Heat exchanger according to one or more of claims 12 to 15, characterized in that the tube material and/or the sleeve material consists of polyethylene.

18. Heat exchanger according to one or more of claims 12 to 15, characterized in that the tube material and/or the sleeve material consists of polyropylene.

19. Heat exchanger according to one or more of claims 12 to 18, characterized in that the tubes have a porosity of a maximum of 20% of the wall volume.

## Revendications

1. Procédé de fabrication d'un échangeur de chaleur comprenant au moins un groupe de tubes en matière synthétique thermoplastique, dans lequel les extrémités de tube d'un groupe se trouvent tout près les unes des autres et les extrémités de tube de tubes voisins sont soudées les unes aux autres du côté frontal, dans lequel les extrémités de tube au moins d'un côté des tubes sont groupées et positionnées dans une douille, après quoi les extrémités de tube forment ensemble une surface pratiquement plane, et dans lequel on apporte, sans contact, aux extrémités de tube groupées suffisamment de chaleur pour que les extrémités de tube se ramollissent au moins en partie et se soudent aux extrémités de tube voisines, caractérisé en ce que, avant l'apport de chaleur, les extrémités de tube sont positionnées de telle manière qu'elles sont disposées au moins à peu près verticalement vers le haut, et ensuite suffisamment de chaleur est apporté par le haut aux extrémités de tube pour que les parois extérieures des extrémités de tube se dilatent lors du ramollissement de telle manière qu'elles s'appliquent sur les parois extérieures d'extrémités de tube voisines pour se souder à ces dernières

2. Procédé selon la revendication 1, caractérisé en ce que les extrémités de tube sont positionnées de telle manière qu'elles arrivent au ras de la douille ou dépassent de la douille de jusqu'à 4 mm.

3. Procédé selon la revendication 1 ou 2, caractérisé en ce que l'on utilise une douille qui est contituée au moins en partie de matériau thermoplastique, on apporte aux extrémités de tube suffisamment de chaleur pour que les tubes voisins de la douille s'appliquent contre la douille et se soudent à celle-ci.

4. Procédé selon l'une ou plusieurs des revendications 1 à 3, caractérisé en ce que l'on effectue le traitement thermique en respectant la condition suivante:

$$0,0175 < Q\, e \left( \frac{t}{\rho\, c_P\, \lambda} \right)^{\frac{1}{2}} < 0,5 \quad ,$$

où

Q désigne la quantité de chaleur apportée par unité de surface (côté frontal) et unité de temps, en $J/m^2.s$,

e désigne le coefficient de dilatation linéaire du matériau de la barre par °K,

t désigne la durée de l'action de la chaleur en secondes,

p désigne la masse volumique du matériau de la barre en $kg/m^3$,

$C_p$ désigne la chaleur spécifique du matériau de la barre en $J/kg.K$, et

$\lambda$ désigne la conductibilité thermique du matériau de la barre en $J/m.s.K$.

5. Procédé selon l'une ou plusieurs des revendications 1 à 4, caractérisé en ce que l'on utilise des tubes en un matériau thermoplastique qui présente, dans le domaine de températures compris entre la température ambiante et la température de fusion, un coefficient de dilatation linéaire moyen compris entre $100 \times 10^{-6}$ et $400 \times 10^{-6}/K$.

6. Procédé selon l'une ou plusieurs des revendications 1 à 5, caractérisé en ce que les extrémités de tube sont chauffées au moins en partie à une température supérieure à la température de fusion du matériau du tube.

7. Procédé selon l'une ou plusieurs des revendications 1 à 6, caractérisé en ce que, avant le traitement thermique, les extrémités de tube sont positionnées dans l'ouverture de la douille de telle manière qu'elles dépassent de la douille de 0,5 à 3 mm.

8. Procédé selon l'une des revendications 1 à 7, caractérisé en ce que les extrémités de tube sont groupées en un paquet compact avant que de la chaleur leur soit apportée.

9. Procédé selon l'une ou plusieurs des revendications 1 à 8, caractérisé en ce qu'on utilise des tubes dont le diamètre hydraulique de chaque espace creux a une valeur située entre 0,3 et 15 mm et dont l'épaisseur de paroi, à l'endroit le plus mince, a une valeur comprise entre 5 et 25% du diamètre hydraulique.

10. Procédé selon la revendication 9, caractérisé en ce que le diamètre hydraulique des espaces creux a une valeur comprise entre 0,5 et 7,5 mm.

11. Procédé selon la revendication 9 ou 10, caractérisé en ce que l'épaisseur de paroi, à l'endroit le plus mince, a une valeur comprise entre 7,5 et 17,5% du diamètre hydraulique.

12. Echangeur de chaleur fabriqué par le procédé selon l'une ou plusieurs des revendications 1 à 11.

13. Echangeur de chaleur selon la revendication 12, caractérisé en ce que les extrémités de tube sont soudées les unes aux autres ou avec la douille au moins jusqu'à une profondeur qui correspond à l'épaisseur de paroi la plus faible des tubes.

14. Echangeur de chaleur selon la revendication 12 ou 13, caractérisé en ce que la section droite interne de la douille et la section droite externe de l'ensemble des extrémités du groupe de tubes disposé dans une douille présentent la forme d'un hexagone.

15. Echangeur de chaleur selon l'une ou plusieurs des revendications 12 à 14, caractérisé en ce que chaque groupe de tubes comprend 7 à 1141 tubes.

16. Echangeur de chaleur selon l'une ou plusieurs des revendications 12 à 15, caractérisé en ce que le matériau du tube et/ou le matériau de douille consiste en un polymère thermoplastique qui appartient aux polymères fluorés.

17. Echangeur de chaleur selon l'une ou plusieurs des revendications 12 à 15, caractérisé en ce que le matériau de tube et/ou le matériau de douille consiste en polyéthylène.

18. Echangeur de chaleur selon l'une ou plusieurs des revendications 12 à 15, caractérisé en ce que le matériau de tube et/ou le matériau de douille consiste en polypropylène.

19. Echangeur de chaleur selon l'une ou plusieurs des revendications 12 à 18, caractérisé en ce que les tubes présentent une porosité égale au plus à 20% du volume de la paroi.

Fig. 1

Fig.2

Fig. 3

Fig. 4